(19) Europäisches Patentamt
European Patent Office
Office européen des brevets

(11) **EP 4 510 364 A1**

## (12) EUROPEAN PATENT APPLICATION
published in accordance with Art. 153(4) EPC

(43) Date of publication:
**19.02.2025 Bulletin 2025/08**

(21) Application number: **22957671.5**

(22) Date of filing: **06.09.2022**

(51) International Patent Classification (IPC):
*H01M 50/533* (2021.01)    *H01M 50/538* (2021.01)
*H01M 4/70* (2006.01)    *H01M 10/0587* (2010.01)

(52) Cooperative Patent Classification (CPC):
**H01M 4/70; H01M 10/0587; H01M 50/533;
H01M 50/538**

(86) International application number:
**PCT/CN2022/117329**

(87) International publication number:
**WO 2024/050697 (14.03.2024 Gazette 2024/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• ZHAO, Fenggang
  Ningde, Fujian 352100 (CN)
• JIN, Haizu
  Ningde, Fujian 352100 (CN)
• CHAI, Zhisheng
  Ningde, Fujian 352100 (CN)
• GU, Hui
  Ningde, Fujian 352100 (CN)

(74) Representative: **Ziebig Hengelhaupt Intellectual
Property Attorneys
Patentanwaltskanzlei PartGmbB
Leipziger Straße 49
10117 Berlin (DE)**

## (54) ELECTRODE ASSEMBLY, BATTERY CELL, BATTERY, ELECTRICAL DEVICE, AND TAB SHAPING APPARATUS

(57)    This application provides an electrode assembly, a battery cell, a battery, an electrical device, and a tab shaping apparatus. The electrode assembly includes a first electrode plate and a second electrode plate that are of opposite polarities, and includes a separator disposed between the first electrode plate and the second electrode plate. The first electrode plate, the separator, and the second electrode plate are wound along a winding direction to form a j elly-roll structure. At least one of the first electrode plate or the second electrode plate includes: a current collector; an active material layer, disposed at least on a surface of the current collector on a side near the separator; and a tab portion, connected to one lateral edge of the current collector, where the lateral edge extends along the winding direction. The tab portion includes a continuous region near the active material layer and a spacing region away from the active material layer. The spacing region includes a plurality of tabs spaced apart along the winding direction.

FIG. 5

EP 4 510 364 A1

## Description

## TECHNICAL FIELD

This application relates to the technical field of batteries, and in particular, to an electrode assembly, a battery cell, a battery, an electrical device, and a tab shaping apparatus.

## BACKGROUND

A rechargeable battery cell, also known as a secondary battery cell, is a battery cell that is reusable after the active material is activated by charging the battery cell that is discharged. Rechargeable battery cells are widely used in electronic devices such as a mobile phone, a notebook computer, an electric power cart, an electric vehicle, an electric airplane, an electric ship, an electric toy car, an electric toy ship, an electric toy airplane, and a power tool.

As a key component of the battery cell, an electrode assembly is prone to incur some battery performance problems or safety problems related to a tab during formation of the electrode assembly.

## SUMMARY

This application aims to solve at least one of technical problems of an electrode assembly in the prior art. To solve such problems, an objective of this application is to disclose an electrode assembly, a battery cell, a battery, an electrical device, and a tab shaping apparatus.

An embodiment in a first aspect of this application provides an electrode assembly, including a first electrode plate and a second electrode plate that are of opposite polarities, and including a separator disposed between the first electrode plate and the second electrode plate. The first electrode plate, the separator, and the second electrode plate are wound along a winding direction to form a jelly-roll structure. At least one of the first electrode plate or the second electrode plate includes: a current collector; an active material layer, disposed at least on a surface of the current collector on a side near the separator; and a tab portion, connected to one lateral edge of the current collector, where the lateral edge extends along the winding direction. The tab portion includes a continuous region near the active material layer and a spacing region away from the active material layer. The spacing region includes a plurality of tabs spaced apart along the winding direction.

In the technical solution of this embodiment of this application, the tab portion includes a continuous region and a spacing region. The spacing region includes a plurality of tabs spaced apart along the winding direction. The tabs may be formed by a process such as die-cutting. By disposing the continuous region, this application implements a specified spacing between the tab and the current collector, thereby preventing an active material coating layer on the current collector from falling off during the slitting of the tab, and improving the performance of the battery.

In some embodiments, in an axial direction of the jelly-roll structure, a height of the tab portion before bending of the tabs is h0, and a height of each tab before bending of the tab is h1, and h0 and h1 satisfy: $0.25 \leq h1/h0 < 1$.

The height relationship between the tab portion and the tab disclosed in this embodiment ensures that the thickness of a dense layer formed after the flattening of the tab meets welding conditions, and also alleviates the problem of detachment of the active material coating layer caused by the slitting of the tab as well as the problem of burning the separator during welding of the tab portion.

In some embodiments, $0.4 \leq h1/h0 \leq 0.8$.

After a large number of experimental analyses by the inventor of this application, it is found that when the height relationship between the tab portion and the tab satisfies $0.4 \leq h1/h0 \leq 0.8$, this application can more satisfactorily achieve the desired thickness of the dense layer, alleviate the problem of detachment of the active material coating layer, and avoid the problem of burning the separator during welding, and can more sufficiently satisfy the conditions of welding and tab slitting, and improve the yield rate of prepared electrode assemblies.

In some embodiments, at least a part of each tab is bent and pressed flat against the current collector. A maximum distance from a bend line to a top of the tab is h2. In an axial direction of the jelly-roll structure, a height of the tab before bending of the tab is h1, and h1 and h2 satisfy: $0.3 \leq h2/h1 \leq 1$.

The dimensional relationship between the tab and the bent part disclosed in this embodiment ensures that the thickness of the dense layer formed after the flattening of the tab meets the welding conditions, and also improves the infiltration performance of an electrolyte solution, and improves the cycle performance and power performance of the electrolyte solution.

In some embodiments, the jelly-roll structure is a cylindrical jelly-roll structure. A diameter of a center roll of the jelly-roll structure is d, a width of the tab is 1, and l and d satisfy: $0.7 \leq 1/d \leq 2$.

The relationship between the width of the tab and the diameter of the innermost coil of the jelly-roll structure disclosed in this embodiment can ensure that the denseness of the dense layer formed after the flattening of the tab meets the welding conditions, and can also avoid a decline in the yield rate caused by the folding, tearing, and other problems of the tabs occurring during the winding of a bare cell.

In some embodiments, a maximum spacing between adjacent tabs in the tab portion is g, a width of each tab is l, and l and g satisfy: $g/1 \leq 0.2$.

The relationship between the tab width and the tab spacing disclosed in this embodiment ensures that the thickness of the dense layer formed after the flattening of the tab meets the welding conditions, and improves the welding quality.

In some embodiments, in an axial direction of the jelly-roll structure, a height of the tab portion before bending of the tabs is h0, satisfying: 3 mm ≤ h0 ≤ 8 mm; and/or, a height of each tab before bending of the tab is h1, satisfying: 1 mm ≤ h1 ≤ 8 mm; and/or at least a part of the tab is bent and pressed flat against the current collector, a maximum distance from a bend line to a top of the tab is h2, and h2 satisfies:

$$1 \text{ mm} \leq h2 \leq 8 \text{ mm}.$$

The design of the dimensions of the tab portion, the tabs, and the bent part disclosed in this embodiment makes the flattened tabs overlap each other to form a denser dense layer, and significantly reduces the probability of being punctured by laser welding, thereby improving the welding quality, and also avoiding the problems such as detachment of the active material layer and a lower infiltration effect of the electrolyte solution.

In some embodiments, the height h0 satisfies: 4 mm ≤ h0 ≤ 7 mm, and/or, the height h1 satisfies: 2 mm ≤ h1 ≤ 7 mm, and/or, the distance h2 satisfies: 2 mm ≤ h2 ≤ 7 mm.

After a large number of experimental analyses by the inventor of this application, it is found that the design of the dimensions of the tab portion, the tabs, and the bent part disclosed in this embodiment makes the flattened tabs overlap each other to form a denser dense layer, and significantly reduces the probability of being punctured by laser welding, thereby further improving the welding quality, and more effectively avoiding the problems such as detachment of the active material layer and a lower infiltration effect of the electrolyte solution.

In some embodiments, the tabs are inclined to one lateral edge of the current collector, and the lateral edge extends along the winding direction.

The tabs of the electrode plate extend at an inclination to the lateral edge of the current collector, thereby further reducing the strength of the tabs in the spacing region, making it easier to press the tabs flat, improving the denseness and thickness of the dense layer formed after the tabs are pressed flat, and improving the yield rate of welding.

In some embodiments, an inclination direction of the tabs is opposite to the winding direction. With the inclination direction of the tabs being opposite to the winding direction of the electrode plate, the tabs is less prone to be folded and broken during winding of the electrode plate, thereby improving the yield rate of the jelly-roll structure.

In some embodiments, at least a part of each tab is bent and pressed flat against the current collector. The bent part of the tab is bent by an extrusion head that rotates and squeezes. An inclination direction of the tabs is identical to a rotation direction of the extrusion head. With the inclination direction of the tab being identical to the rotation direction of the extrusion head, this application avoids damage to the tabs during the flattening, especially the tabs at the outer coil and the ending of the jelly-roll structure, and improves the yield rate of the jelly-roll structure.

In some embodiments, an inclination angle θ of the tabs satisfies: 45° ≤ θ < 90°. The inclination angle θ of the tabs disclosed in this embodiment can effectively reduce the bending strength of the tabs, make it easier to press the tabs flat, and effectively avoid the problems of folding and breaking the tabs during the winding and/or flattening.

In some embodiments, a bevel edge formed by cutting a corner is disposed on an ending side of a tab located at an ending of the jelly-roll structure.

When the winding of the electrode plate is terminated by cutting, the cutting position is uncertain. Therefore, the last tab in the spacing region may be cut and undersized in width. Consequently, the tab at the ending of the electrode plate is prone to the problems such as detachment, cracking, and warping. In view of this, in this embodiment, the tab at the ending of the electrode plate is die-cut to cut away the corner at the ending end of the tab, thereby alleviating such problems.

In some embodiments, at least a part of the bevel edge is arc-shaped.

After experimental analysis by the inventor of this application, it is found that die-cutting the tab at the ending of the electrode plate to form an arc-shaped bevel edge can more effectively avoid the problems such as detachment, break, and warpage of the tab at the ending, and further improve the yield rate of the jelly-roll structure.

An embodiment in a second aspect of this application provides a battery cell. The battery cell includes the electrode assembly according to the above embodiment.

In some embodiments, at least a part of the tab is bent and pressed flat against the current collector. A maximum distance from a bend line to a top of the tab is h2. The jelly-roll structure is a cylindrical jelly-roll structure. The battery cell further includes: a current collecting plate, located on one side of the cylindrical jelly-roll structure, the side being connected to the tab portion. The current collecting plate is fixedly connected to the bent part of the tab by welding. A thickness of the current collecting plate is t1, and t1 and h2 satisfy: 0.05 ≤ t1/h2 ≤ 0.2.

The relationship between the height of the bent part of the tab and the thickness of the current collecting plate disclosed in this embodiment ensures that the thickness of the dense layer formed after the flattening of the tab meets the welding conditions, and also increases the capacity of the battery.

An embodiment in a third aspect of this application provides a battery. The battery includes the battery cell according to the above embodiment.

An embodiment in a fourth aspect of this application provides an electrical device. The electrical device includes the battery disclosed in the preceding embodiment. The battery is configured to provide electrical energy.

An embodiment in a fifth aspect of this application provides a tab shaping apparatus, including an extrusion head. The extrusion head is configured to smooth the tabs in the electrode assembly according to any one of the above embodiments so that at least a part of each tab is bent and pressed flat against the current collector.

In some embodiments, the tabs are inclined to one lateral edge of the current collector, and the lateral edge extends along the winding direction. A rotation direction of the extrusion head is configured to be identical to an inclination direction of the tabs.

With the rotation direction of the extrusion head being identical to the inclination direction of the tabs, this application avoids damage to the tabs during the flattening, especially the tabs at the outer coil and the ending of the jelly-roll structure, and improves the yield rate of the j elly-roll structure.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

**BRIEF DESCRIPTION OF DRAWINGS**

Unless otherwise specified, the same reference numerals throughout a plurality of drawings represent the same or similar components or elements. The drawings are not necessarily drawn to scale. Understandably, the drawings merely depict some embodiments of this application, but are not to be intended as any limitation on the scope of this application.

FIG. 1 is a schematic structural diagram of an electrical device according to some embodiments of the present disclosure;
FIG. 2A is a schematic structural diagram of a battery according to some embodiments of the present disclosure;
FIG. 2B is a schematic structural diagram of a plurality of battery cells electrically connected in a battery according to some embodiments of the present disclosure;
FIG. 3 is a schematic exploded view of a battery cell according to some embodiments of the present disclosure;
FIG. 4 is a cross-sectional schematic view of a jelly-roll structure of an electrode assembly according to some embodiments of the present disclosure;
FIG. 5 is a schematic structural diagram of a first electrode plate, a second electrode plate, and a separator in an electrode assembly according to some embodiments of the present disclosure;
FIG. 6 is a schematic structural diagram of an electrode assembly according to some embodiments of the present disclosure;
FIG. 7 is a schematic structural diagram of an electrode assembly according to some other embodiments of the present disclosure;
FIG. 8 is a schematic diagram of an unwound electrode plate in an electrode assembly according to some embodiments of the present disclosure;
FIG. 9 is a cross-sectional schematic view of an electrode plate in an electrode assembly according to some embodiments of the present disclosure;
FIG. 10 is a schematic diagram of an unwound electrode plate in an electrode assembly according to some other embodiments of the present disclosure;
FIG. 11 is a schematic structural diagram of an electrode assembly according to some other embodiments of the present disclosure; and
FIG. 12 is a schematic diagram of an unwound electrode plate in an electrode assembly according to some other embodiments of the present disclosure.

List of reference numerals:

10A: first electrode plate; 10B: second electrode plate; 10C: separator; 100: jelly-roll structure;
11A, 11B, 222: tab portion; 12A, 12B: active material layer; 13A: insulation layer;
17A, 17B: current collector; 14A, 14B: spacing region; 15A, 15B: continuous region;
16A, 16B: tab; 1000: extrusion head; 20: battery cell; 21: shell assembly;
211: housing; 212: end cap; 22: electrode assembly; 221: body portion; 23: current collecting component;
230: current collecting plate; 231: welding region; 30: battery; 31: first box; 32: second box;
33: electrode terminal; 34: busbar; 40: vehicle.

**DETAILED DESCRIPTION OF EMBODIMENTS**

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

In some related technologies, an electrode assembly in a cylindrical battery cell includes a long tab extending beyond an end portion of a jelly-roll structure. The long tab extends continuously along a winding direction of the electrode plate. Before the long tab is welded to a current collecting plate, the long tab needs to be bent and smoothed to form a structure in which the tabs overlap each other layer by layer from the outside to the inside. After research by the inventor, it is found that the long tab exhibits a specified curvature along with the winding of the electrode plate. The curved long tab is prone to be wrinkled when being pressed flat, and therefore, is prone to be broken and damaged. This also brings about a risk that the wrinkles are inserted toward the electrode plate and lead to a short circuit of the electrode plate, thereby impairing the safety performance of the battery. Moreover, the long tab wound into a ring shape is of high bending strength. The deformation generated when the tab is squeezed and collapsed can hardly be ensured to be continuous and uniform. Therefore, the stacked layers of the flattened tabs are not uniform enough, and the denseness of the tabs is low. The tabs are prone to be punctured when being welded to the current collecting plate, posing a very grim challenge to the manufacturing equipment and process.

In view of the above situation, some embodiments of the present disclosure provide an electrode assembly, a battery cell, a battery, an electrical device, and a tab shaping apparatus to improve safety performance of the battery.

The electrode assembly according to embodiments of the present disclosure is applicable to various battery cells. The battery cell may be a lithium-ion secondary battery, a lithium-ion primary battery, a lithium-sulfur battery, a sodium-lithium-ion battery, a sodium-ion battery, a magnesium-ion battery, or the like. The type of the battery cell is not limited herein. The battery cell may be in various shapes such as cylindrical, flat, cuboidal or other shapes. The shape of the battery cell is not limited herein. In terms of the packaging form, the battery cell is typically classed into: cylindrical battery cell, prismatic battery cell, and pouch-type battery cell. The type of the battery cell is not limited herein.

The battery cell according to embodiments of the present disclosure is applicable to various batteries. A battery can supply power to electrical devices such as a vehicle, for example, provide a power supply for maneuvering the vehicle or a power supply for driving the vehicle. The battery may include a box and a battery module. The box is configured to provide an accommodation space for the battery module. The battery module is mounted in the box. The box may be made of a metal material. The battery module may include a plurality of battery cells connected in series, parallel, or series-and-parallel pattern. The battery cell is a minimum unit of a battery. The battery cell includes an electrode assembly in which electrochemical reactions occur.

The battery according to embodiments of the present disclosure is applicable to various electrical devices powered by a battery. The electrical device may be a mobile phone, a portable device, a notebook computer, an electric power cart, an electric vehicle, a ship, a spacecraft, an electric toy, an electric tool, or the like. For example, the spacecraft includes an airplane, a rocket, a space shuttle, a spaceship, and the like. The electric toy includes a fixed or mobile electric toy, such as a game console, an electric car toy, an electric ship toy, an electric airplane toy, and the like. The electric tool includes an electric tool for metal cutting, an electric grinding tool, an electric assembly tool, an electric tool for railways, such as an electric drill, an electric grinder, an electric wrench, an electric screwdriver, an electric hammer, an electric impact drill, a concrete vibrator, and an electric planer. The electrical device is not particularly limited herein.

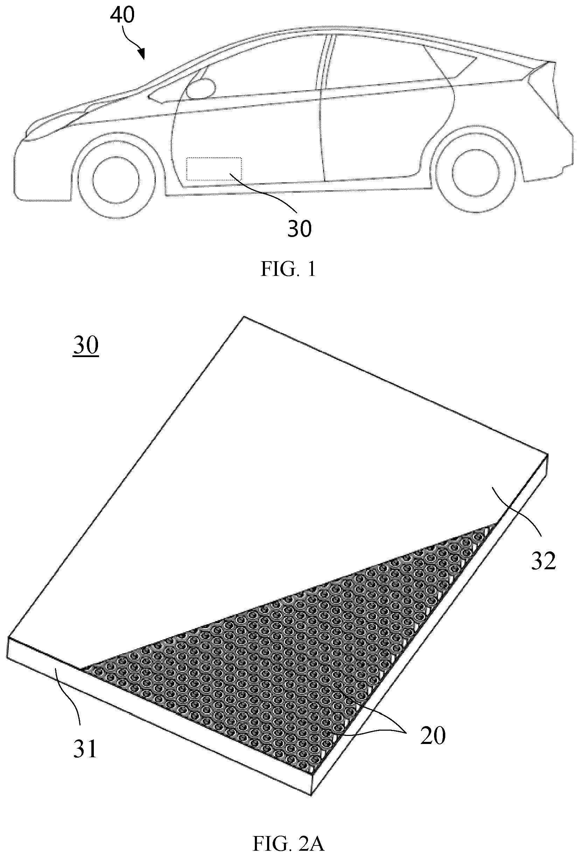

FIG. 1 is a schematic structural diagram of an electrical device according to some embodiments of the present disclosure. For ease of description, a vehicle is used as an example of the electrical device. Referring to FIG. 1, a battery 30 is disposed inside the vehicle 40. The battery 30 may be disposed at the bottom, front, or rear of the vehicle 40. The battery 30 is configured to supply power to the vehicle 40. For example, the battery 30 serves as an operating power supply of the vehicle 40. The vehicle 40 may further include a controller and a motor. The controller is configured to control the battery 30 to supply power to the motor, for example, to meet electrical energy requirements in starting, navigating, or running the vehicle 40.

In some embodiments of this application, the battery 30 serves not only as an operating power supply of the vehicle 40, but may also serve as a driving power supply of the vehicle 40 to provide driving power for the vehicle 40 in place of or partly in place of fuel oil or natural gas.

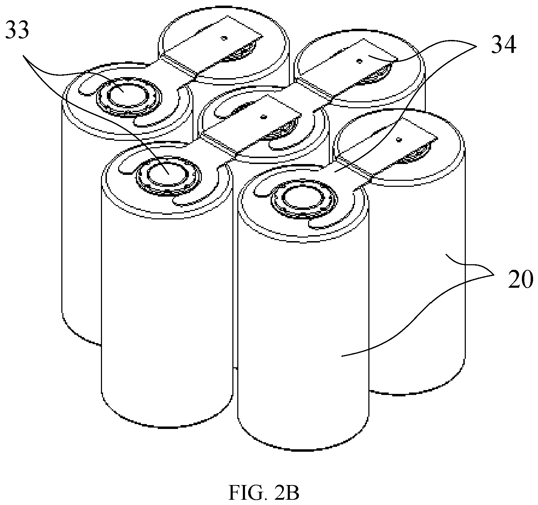

FIG. 2A is a schematic structural diagram of a battery according to some embodiments of the present disclosure. FIG. 2B is a schematic structural diagram of a plurality of battery cells electrically connected in a battery according to some embodiments of the present disclosure. Referring to FIG. 2A, in some embodiments, the battery 30 includes a box and one or more battery cells 20 disposed in the box. The box includes a first box 31 and a second box 32. The first box 31 and the second box 32 fit each other. The first box 31 and the second box 32 together define an accommodation space configured to accommodate the battery cell 20. The second box 32 may be a hollow structure that is opened at one end to form the accommodation space configured to accommodate the battery cell 20. The first box 31 may be a platelike structure. The first box 31 fits on an opening of the second box 32 so that the first box 31 and the second box 32 together define the accommodation space. Alternatively, both the first box 31 and the second box 32 may be hollow structures, each being opened at one side to form the accommodation space configured to accommodate the battery cell 20. The opening of the first box 31 fits the opening of the second box 32. Definitely, the box 20 formed by the first box 31 and the second box 32 may be in various shapes such as a cylinder or a cuboid. To facilitate observation of the plurality of battery cells 20 within the box 31, only a part of the second box 32 is shown in FIG. 2A. Referring to FIG. 2B, the battery cells 20 are electrically connected to each other, for example, in series, parallel, or series-and-parallel pattern, so as to achieve the desired values of electrical performance indicators of the battery 30. A plurality of battery cells 20 are arranged in a row. One or more rows of battery cells 20 may be arranged in the box as required.

In some embodiments, the battery cells 20 of the battery 30 may be arranged along at least one of a length direction or a width direction of the box. At least one row or one column of battery cells 20 may be disposed as actually required. As required, one or more layers of battery cells 20 may be disposed in the height direction of the battery 30.

In some embodiments, the plurality of battery cells 20 may be connected in series, parallel, or series-and-parallel pattern to form a battery module first, and then a plurality of battery modules are connected in series, parallel, or series-and-parallel pattern to form an entirety that is to be accommodated in the box. In some other embodiments, all battery cells 20 are directly connected in series, parallel, or series-and-parallel pattern, and then a whole of all battery cells 20 is accommodated in the box. In FIG. 2B, the electrode terminals 33 of the battery cell 20 are electrically connected to an adjacent battery cell 20 by a busbar 34.

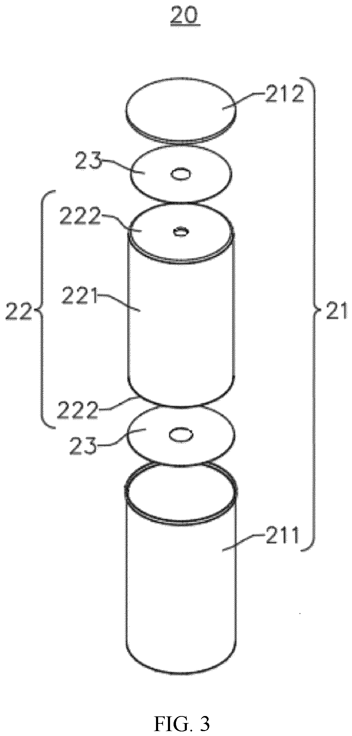

FIG. 3 is a schematic exploded view of a battery cell according to some embodiments of the present disclosure. As shown in FIG. 3, the battery cell 20 may include a shell assembly 21 and an electrode assembly 22 located in the shell assembly 21. The shell assembly 21 includes a housing 211 and an end cap 212. The housing 211 is a hollow structure opened at one end. The end cap 212 fits on, and is hermetically connected to, the opening of the housing 211, to form a sealed space configured to accommodate the electrode assembly 22. The electrode assembly 22 is mounted in the cavity of the housing 211.

The housing 211 and the end cap 212 may be stand-alone components. The end cap 212 fits on the opening of the housing 211 to form an internal environment of the battery cell 20. Without limitation, the housing 211 and the end cap 212 may be integrated instead. Specifically, the housing 211 and the end cap 212 may form a common connection face before other components are put into the housing. Subsequently, when the interior of the battery cell 20 needs to be sealed in the housing, the end cap 212 is made to fit the housing 211. The housing 211 and the end cap 212 may be made of a variety of materials such as copper, iron, aluminum, stainless steel, aluminum alloy, or plastic. The materials are not particularly limited herein.

Understandably, the shell assembly is not limited to the structures enumerated above. The shell assembly may be another structure instead. For example, the shell assembly includes a housing and two end caps. The housing is a hollow structure opened at two opposite ends. One end cap fits on, and is hermetically connected to, one corresponding opening of the housing, to form a sealed space configured to accommodate the electrode assembly and an electrolyte.

The electrode assembly 22 may include a body portion 221 and tab portion 222. The tab portion 222 extends from the body portion 221 so that the tab portion 222 protrudes beyond the end portion of the body portion 221. The electrode assembly 22 may include a positive electrode plate, a negative electrode plate, and a separator. The electrode assembly 22 may be a jelly-roll structure formed by winding the positive electrode plate, the negative electrode plate, and the separator. Alternatively, the electrode assembly 22 may be a stacked structure formed by stacking the positive electrode plate, the negative electrode plate, and the separator. The positive electrode plate includes a positive current collector and a positive active material layer applied on two opposite sides of the positive current collector. The negative electrode plate includes a negative current collector and a negative active material layer applied on two opposite sides of the negative current collector. The body portion 221 is a part of the electrode assembly 22, the part corresponds to a region of the electrode plates, and the region is coated with an active material layer. The tab portion 222 is a part, uncoated with the active material layer, of the electrode plates. The tab portion 222 may be divided into a positive tab portion and a negative tab portion. The positive tab portion and the negative tab portion may be disposed at two ends of the body portion 221 respectively or at one end of the body portion 221.

As shown in FIG. 3, the battery cell 20 includes an electrolyte solution and a current collecting component 23 in addition to the electrode assembly 22 and the shell assembly 21. The electrolyte solution is located in the housing to infiltrate the electrode assembly 22. The shell assembly 21 includes an electrode lead-out portion (for example, a housing, an end cap, or an electrode terminal mounted on the housing or end cap) configured to input or output electrical energy. The electrode assembly 22 is accommodated in the shell assembly 21. The current collecting component 23 is accommodated in the shell assembly 21. The current collecting component 23 is configured to connect the electrode lead-out portion of the shell assembly 21 to the tab portion 222 of the electrode assembly 22, so as to implement electrical connection between the tab portion 222 and the electrode lead-out portion. For example, in some embodiments, the current collecting component 23 may be plate-shaped, referred to as a current collecting plate, to facilitate connection to the tab portion 222 at the end portion of the electrode assembly 22.

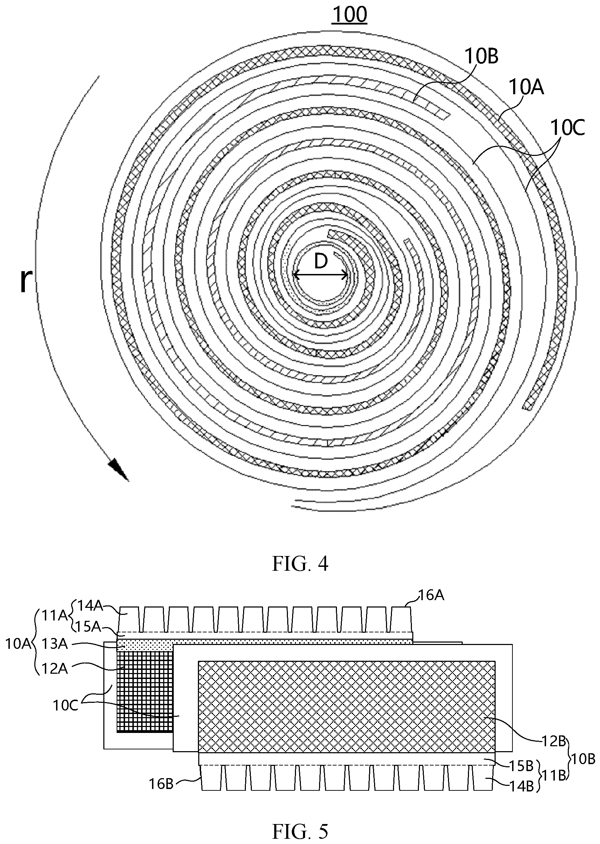

FIG. 4 is a cross-sectional schematic view of a jelly-roll structure of an electrode assembly according to some embodiments of the present disclosure. Referring to FIG. 4, according to some embodiments of this application, the electrode assembly includes: a first electrode plate 10A and a second electrode plate 10B that are of opposite polarities; and a separator 10C disposed between the first electrode plate 10A and the second electrode plate 10B. The first electrode plate 10A, the separator 10C, and the second electrode plate 10B are wound along the winding direction r to form a jelly-roll structure 100, for example, to form a stacked structure in FIG. 4 in which the second electrode plate 10B, the separator 10C, the first electrode plate 10A, the separator 10C, and so on are stacked along a radial direction of the jelly-roll structure 100. The first electrode plate 10A may be a negative electrode plate or a positive electrode plate. The second electrode plate 10B is a positive electrode plate or a negative electrode plate of an opposite polarity to the first electrode plate 10A. The jelly-roll structure 100 may form a cylindrical jelly-roll structure after being wound. Accordingly, the housing employed for the battery cell containing the electrode assembly is a cylindrical housing structure.

The battery cell 10 works primarily by shuttling metal ions between the positive electrode plate and the negative electrode plate. The separator 10C may be made of a material such as PP (polypropylene, polypropylene) or PE (polyethylene, polyethylene).

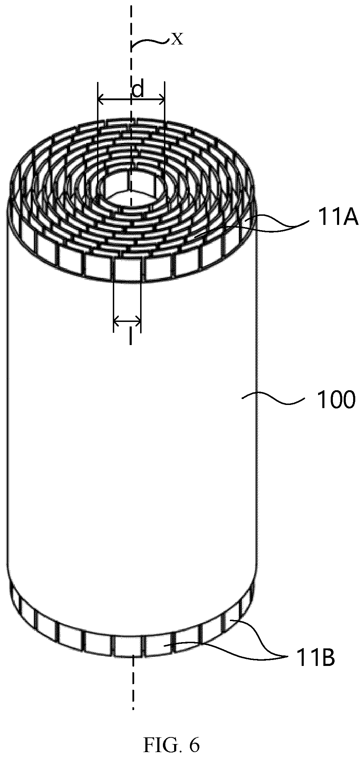

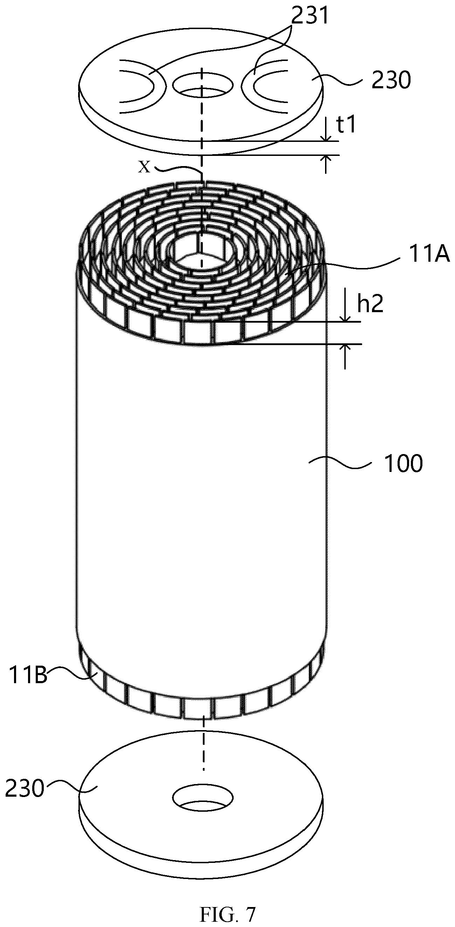

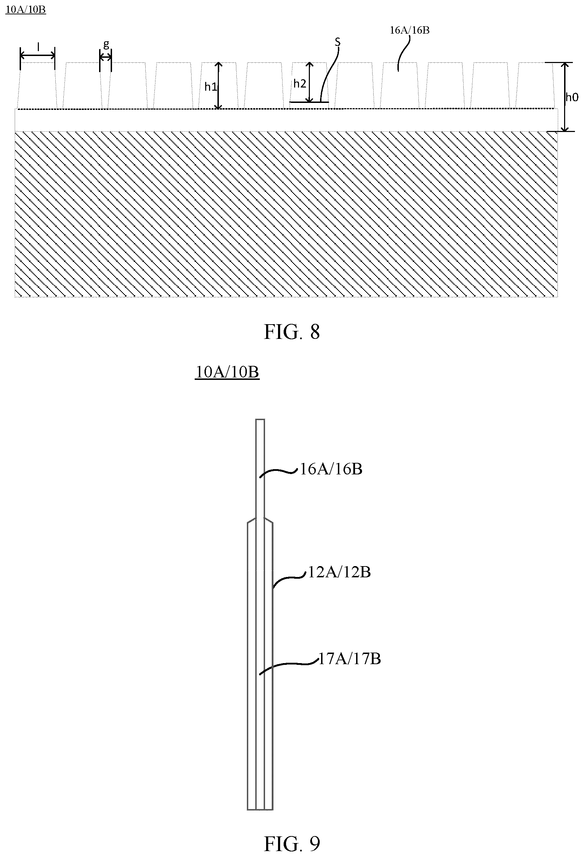

FIG. 5 is a schematic structural diagram of a first electrode plate, a second electrode plate, and a separator in an electrode assembly according to some embodiments of the present disclosure. FIG. 6 is a schematic structural diagram of an electrode assembly according to some embodiments of the present disclosure. FIG. 7 is a schematic structural diagram of an electrode assembly according to some other embodiments of the present disclosure. FIG. 8 is a schematic diagram of an unwound electrode plate in an electrode assembly according to some embodiments of the present disclosure. FIG. 9 is a cross-sectional schematic view of an electrode plate in an electrode assembly according to some embodiments of the present disclosure.

Referring to FIG. 5, FIG. 8, and FIG. 9, in some embodiments, at least one of the first electrode plate 10A or the second electrode plate 10B includes: a current collector (17A, 17B), an active material layer (12A, 12B), and a tab portion (11A, 11B). Using an example in which the electrode plate in FIG. 8 and FIG. 9 is a first electrode plate 10A, as shown in FIG. 5, FIG. 8, and FIG. 9, the first electrode plate 10A includes a current collector 17A, an active material layer 12A, and a tab portion 11A. The active material layer 12A is disposed at least on a surface of the current collector on a side near the separator 10C. Using an example in which the electrode plate in FIG. 8 and FIG. 9 is a second electrode plate 10B, as shown in FIG. 5, FIG. 8, and FIG. 9, the second electrode plate 10B includes a current collector 17B, an active material layer 12B, and a tab portion 11B. The active material layer 12B is disposed at least on a surface of the current collector on a side near the separator 10C.

Using an example in which the first electrode plate 10A is a negative electrode plate, the negative electrode plate includes a current collector (that is, a negative current collector), an active material layer 12A (that is, a negative active material layer), and a tab portion 11A (that is, a negative tab portion). The active material layer 12A is applied on a surface of the current collector. Using FIG. 5 as an example, the negative electrode plate may further include an insulation layer 13A (for example, a ceramic insulation layer) that covers a surface of the current collector and that is located on a side of the active material layer 12A, the side being close to the tab portion 11A. The insulation layer 13A prevents the burrs on a cut edge of the negative electrode plate from piercing the separator and causing a short circuit with the positive electrode plate.

The tab portion 11A is connected to one lateral edge of the current collector, and the lateral edge extends along the winding direction r. The tab portion 11A includes two regions, of which one is a continuous region 15A near the active material layer, and the other is a spacing region 14A away from the active material layer. The spacing region 14A includes a plurality of tabs 16A spaced apart along the winding direction r. The negative current collector may be made of copper, and the negative active material layer may be graphite, silicon, or the like. In some embodiments, the tab portion 11A may be welded to the lateral edge of the current collector. Alternatively, the tab portion 11A may be formed by die-cutting the current collector.

Using an example in which the second electrode plate 10B is a positive electrode plate, the positive electrode plate includes a current collector (that is, a positive current collector), an active material layer 12B (that is, a positive active material layer), and a tab portion 11B (that is, a positive tab portion). The active material layer 12B is applied on a surface of the current collector.

The tab portion 11B is connected to one lateral edge of the current collector, and the lateral edge extends along the winding direction r. The tab portion 11B includes two regions, of which one is a continuous region 15B near the active material layer, and the other is a spacing region 14B away from the active material layer. The spacing region 14B includes a plurality of tabs 16B spaced apart along the winding direction r. Using a lithium-ion battery as an example, the positive current collector may be made of aluminum, and a positive active material layer may be lithium cobalt oxide, lithium iron phosphate, ternary lithium, lithium manganese oxide, or the like. In some embodiments, the tab portion 11B may be welded to the lateral edge of the current collector. Alternatively, the tab portion 11B may be formed by die-cutting the current collector.

As shown in FIG. 6 and FIG. 7, in the electrode assembly, the tab portion 11A of the first electrode plate 10A and the tab portion 11B of the second electrode plate 10B protrude from the end portion of the jelly-roll structure 100, and can be bent and pressed flat by an extrusion head separately, for example, by kneading or smoothing. The flattened tab portion is welded to the current collecting component (for example, the current collecting plate 230 in FIG. 7). For example, in FIG. 7, a tab portion 11A and a tab portion 11B are disposed at two ends of the jelly-roll structure 100 respectively. The tab portion 11A and the tab portion 11B are welded to the current collecting plate 230 separately after being smoothed or kneaded.

Referring to FIG. 5 to FIG. 7, the tab portion (11A, 11B) includes a continuous region (15A, 15B) and a spacing region (14A, 14B). The spacing region (14A, 14B) includes a plurality of tabs (16A, 16B) spaced apart along the winding direction r. The tabs (16A, 16B) may be formed by a process such as die-cutting. By disposing the continuous region (15A, 15B), this application implements a specified spacing between the tab (16A, 16B) and the current collector (17A, 17B), thereby preventing an active material coating layer on the current collector (17A, 17B) from falling off during the die-cutting of the tab.

Furthermore, when pressing the tab portions (11A, 11B) flat, the bending strength of the spacing region (14A, 14B) is significantly lower than the bending strength of the continuous region (15A, 15B), and therefore, the continuous region (15A, 15B) does not significantly yield or bend while the spacing region (14A, 14B) is bent and pressed flat, thereby avoiding excessive nearness of the end face of the tab portion to the separator 10C. The excessive nearness is prone to burn the separator 10C in welding the flattened portion (11A, 11B).

Moreover, by arranging a plurality of tabs (16A, 16B) spaced apart on the lateral edge of the electrode plate (10A, 10B) extending along the winding direction r, the tab (16A, 16B) located at the end portion of the jelly-roll structure 100 can be less wrinkled when being flattened, thereby maximally eliminating problems such as break of and damage to the tab (16A, 16B) caused by wrinkles of the tab (16A, 16B), and damage to the electrode plate or a short circuit of the electrode plate caused by the wrinkles and bulges of the tab (16A, 16B) inserted into the electrode plate layer. In addition, the spaced tabs (16A and 16B) overlap each other when being pressed flat, thereby forming a more compacter dense layer, avoiding puncturing in subsequent welding, and improving the welding yield rate.

According to some embodiments of this application, as shown in FIG. 6, FIG. 7, and FIG. 8, the axis of the jelly-roll structure 100 is X. In the axial direction of the jelly-roll structure 100, that is, in the extension direction of the axis X, the height of the tab portion before bending of the tabs is h0, and the height of each tab before bending of the tab is h1, satisfying: $0.25 \leq h1/h0 < 1$.

For example, in some embodiments, the h1/h0 ratio may be equal to 0.25, 0.35, 0.45, 0.55, 0.65, 0.75, 0.85, or 0.95.

Definitely, the value range of the h1/h0 ratio is not limited. For example, in other embodiments, any values are applicable as long as h1 is less than h0.

Understandably, in the electrode assembly, the final status of the tab is bent and pressed flat to facilitate connection to the current collecting plate. As shown in FIG. 8, the height h0 of the tab portion and the height h1 of the tabs defined in this embodiment are both the heights before bending of the tabs (16A, 16B), that is, the original heights of the tab portion and the tabs (16A, 16B). In some embodiments, using FIG. 8 as an example, h0 and h1 may be measured before the tabs (16A, 16B) of the electrode plate are bent. In some other embodiments, using FIG. 6 and FIG. 7 as an example, the tab portion (11A, 11B) in the jelly-roll structure 100 may be stroked straight to facilitate measurement of h0 and h1.

In this embodiment, the dimensions of the tab portion of at least one of the first electrode plate 10A or the second electrode plate 10B satisfy the above formula. For example, the tab portion 11A of the first electrode plate 10A satisfies the above dimensional range, or the tab portion 11B of the second electrode plate 10B satisfies the above dimensional range, or both the tab portion 11A of the first electrode plate 10A and the tab portion 11B of the second electrode plate 10B satisfy the above dimensional range.

The height h0 of the tab portion reflects an elongation dimension of the tab portion in a direction perpendicular to the lateral edge of the current collector. The height h1 of the tab is the height of the spacing region. Similarly, the height h1 of the tab reflects an elongation dimension of the tab along a direction perpendicular to the lateral edge of the current collector.

After research by the inventor of this application, it is found that if the h1/h0 ratio is less than 0.25, then the height of the tab in the spacing region is insufficient, and the thickness of the dense layer formed after the flattening of the tab is insufficient, thereby being prone to the problems such as puncturing during welding. If the h1/h0 ratio is greater than or equal to 1, then the height of the tab is greater than or equal to the entire tab portion, the tab slitting may make the active material coating layer fall off, and the separator is prone to be burned during welding of the flattened tab portion. The height relationship between the tab portion and the tab disclosed in this embodiment ensures that the thickness of a dense layer formed after the flattening of the tab meets welding conditions, and also alleviates the problem of detachment of the active material coating layer caused by the slitting of the tab as well as the problem of burning the separator during welding of the tab portion.

According to some embodiments of this application, the height of the tab portion before bending of the tabs is h0, and the height of each tab before bending of the tab is h1, satisfying: $0.4 \leq h1/h0 \leq 0.8$.

For example, in some embodiments, the h1/h0 ratio may be equal to 0.4, 0.5, 0.6, 0.7, or 0.8.

After a large number of experimental analyses by the inventor of this application, it is found that when the height relationship between the tab portion and the tab satisfies $0.4 \leq h1/h0 \leq 0.8$, this application can more satisfactorily achieve the desired thickness of the dense layer, alleviate the problem of detachment of the active material coating layer, and avoid the problem of burning the separator during welding, and can more sufficiently satisfy the conditions of welding and tab slitting, and improve the yield rate of prepared electrode assemblies.

According to some embodiments of this application, at least a part of the tab is bent and pressed flat against the current collector. As shown in FIG. 8, a maximum distance from a bend line S to a top (free end) of the tab (16A, 16B) is h2, that is, the height of the bent part is h2. In an axial direction of the jelly-roll structure 100, the height of the tab before bending of the tab is h1, and h1 and h2 satisfy: $0.3 \leq h2/h1 \leq 1$.

For example, in some embodiments, the h2/h1 ratio may be equal to 0.3, 0.4, 0.5, 0.6, 0.7, 0.8, 0.9, or 1.

Definitely, in practical applications, the value range of the h2/h1 ratio is not limited. For example, in other embodiments, the h2/h1 ratio may be greater than 1, that is, the continuous region of the tab portion may yield or bend.

In this embodiment, the dimensions of the tab portion of at least one of the first electrode plate 10A or the second electrode plate 10B satisfy the above formula. For example, the tab portion 11A of the first electrode plate 10A satisfies the above dimensional range, or the tab portion 11B of the second electrode plate 10B satisfies the above dimensional range, or both the tab portion 11A of the first electrode plate 10A and the tab portion 11B of the second electrode plate 10B satisfy the above dimensional range.

The bent and flattened part of the tab is also a part that is used for welding to the current collecting component (such as current collecting plate 20). The height h2 of the bent part of the tab affects the yield rate of subsequent welding.

After research by the inventor of this application, it is found that if the h2/h1 ratio is less than 0.3, then the height of the bent portion is insufficient, thereby resulting in an insufficient thickness of the dense layer formed, failing to meet the welding conditions, and being prone to the problems such as puncturing during welding. If the h2/h1 ratio is greater than 1, then the height of the bent part is greater than the height of the tab before bending. In other words, the continuous region also bends. In this case, the thickness of the dense layer formed by flattening is not increased significantly. Rather, the infiltration performance of the electrolyte solution is adversely affected because the slit between the tabs is maximally compressed. The dimensional relationship between the tab and the bent part disclosed in this embodiment ensures that the thickness of the dense layer formed after the flattening of the tab meets the welding conditions, and also improves the infiltration performance of an electrolyte solution, and improves the cycle performance and power performance of the electrolyte solution.

As shown in FIG. 6, according to some embodiments of this application, the jelly-roll structure 100 is a cylindrical jelly-roll structure. A diameter of a center roll of the jelly-roll structure 100 is d. By using the arrow head of the winding direction (r) as a starting end, d is a circumferential diameter of the first tab of the tab portion (11A, 11B) along the winding direction (r) in the corresponding electrode plate layer in the cylindrical jelly-roll structure 100. In other words, the minimum diameter corresponding to the innermost tab of the jelly-roll structure is d. The width of the tab is l, satisfying; $0.7 \leq l/d \leq 2$. The width l of the tab reflects the dimension of the tab along the winding direction r.

For example, in some embodiments, the lid ratio may be equal to 0.7, 0.8, 0.9, 1, 1.1, 1.2, 1.3, 1.4, 1.5, 1.6, 1.7, 1.8, 1.9, or 2.

In this embodiment, the dimensions of the tab of at least one of the first electrode plate 10A or the second electrode plate 10B satisfy the above formula. For example, the tab 16A of the first electrode plate 10A satisfies the above dimensional range, or the tab 16B of the second electrode plate 10B satisfies the above dimensional range, or both the tab 16A of the first electrode plate 10A and the tab 16B of the second electrode plate 10B satisfy the above dimensional range.

After research by the inventor of this application, it is found that if the lid ratio is less than 0.7, then the width of the tab is undersized, and the tab is prone to be folded and torn when the die-cut tab is being rewound and when a bare cell is being prepared by winding, thereby resulting in a decline in the yield rate or even safety hazards. If the lid ratio is greater than 2, then the width of the tab is oversized, and the strength of the tab is not reduced effectively (especially in the inner coil and the middle coil of the bare cell), thereby failing to effectively enhance the compactness of the dense layer formed after flattening of the tab, and being prone to poor welding. The relationship between the width of the tab and the diameter of the innermost coil of the jelly-roll structure disclosed in this embodiment can ensure that the denseness of the dense layer formed after the flattening of the tab meets the welding conditions, and can also avoid a decline in the yield rate caused by the folding, tearing, and other problems of the tabs occurring during the winding of a bare cell.

As shown in FIG. 8, according to some embodiments of this application, a maximum spacing between adjacent tabs is g, and the width of the tab is l, satisfying: $g/l \leq 0.2$.

For example, in some embodiments, the g/l ratio may be equal to 0.05, 0.10, 0.15, or 0.2.

In this embodiment, the dimensions of the tab of at least one of the first electrode plate 10A or the second electrode plate 10B satisfy the above formula. For example, the tab 16A of the first electrode plate 10A satisfies the above dimensional range, or the tab 16B of the second electrode plate 10B satisfies the above dimensional range, or both the tab 16A of the first electrode plate 10A and the tab 16B of the second electrode plate 10B satisfy the above dimensional range.

After research by the inventor of this application, it is found that if the g/l ratio is greater than 0.2, then the width of the tab is undersized, and the spacing between the tabs is oversized, thereby resulting in an insufficient thickness of the dense layer formed after the flattening, and being prone to reduce the yield rate of welding. The relationship between the tab width and the tab spacing disclosed in this embodiment ensures that the thickness of the dense layer formed after the flattening of the tab meets the welding conditions, and improves the welding quality.

As shown in FIG. 8, according to some embodiments of this application, the height of the tab portion before bending of the tabs is h0, satisfying: $3 \, mm \leq h0 \leq 8$ mm; and/or, the height of the tab before bending of the tab is h1, satisfying: $1 \, mm \leq h1 \leq 8 \, mm$; and/or the height of the bent part of the tab is h2, satisfying: $1 \, mm \leq h2 \leq 8 \, mm$.

For example, in some embodiments, h0 may be equal to 3 mm, 4 mm, 5 mm, 6 mm, 7 mm, or 8 mm; h1 may be equal to 1 mm, 2 mm, 3 mm, 4 mm, 5 mm, 6 mm, 7 mm, or 8 mm; and h2 may be equal to 1 mm, 2 mm, 3 mm, 4 mm, 5 mm, 6 mm, 7 mm, or 8 mm.

In this embodiment, the dimensions of the tab portion of at least one of the first electrode plate 10A or the second electrode plate 10B satisfy the above formula. For example, the tab portion 11A of the first electrode plate 10A satisfies the above dimensional range, or the tab portion 11B of the second electrode plate 10B satisfies the above dimensional range, or both the tab portion 11A of the first electrode plate 10A and the tab portion 11B of the second electrode plate 10B satisfy the above dimensional range.

After a large number of experimental analyses by the inventor of this application, it is found that the design of the dimensions of the tab portion, the tabs, and the bent part disclosed in this embodiment makes the flattened tabs overlap each other to form a denser tab layer, and significantly reduces the probability of being punctured by laser welding, thereby improving the welding quality, and also avoiding the problems such as detachment of the active material coating layer and a lower infiltration effect of the electrolyte solution.

As shown in FIG. 8, according to some embodiments of this application, the height of the tab portion before bending of the tabs is h0, satisfying: $4\,mm \leq h0 \leq 7\,mm$; and/or, the height of the tab before bending of the tab is h1, satisfying: $2\,mm \leq h1 \leq 7\,mm$; and/or the height of the bent part of the tab is h2, satisfying: $2\,mm \leq h2 \leq 7\,mm$. In this embodiment, the dimensions of the tab portion of at least one of the first electrode plate 10A or the second electrode plate 10B satisfy the above formula.

For example, in some embodiments, h0 may be equal to 4 mm, 5 mm, 6 mm, or 7 mm; h1 may be equal to 2 mm, 3 mm, 4 mm, 5 mm, 6 mm, or 7 mm; and h2 may be equal to 2 mm, 3 mm, 4 mm, 5 mm, 6 mm, or 7 mm.

After a large number of experimental analyses by the inventor of this application, it is found that the design of the dimensions of the tab portion, the tabs, and the bent part disclosed in this embodiment makes the flattened tabs overlap each other to form a denser tab layer, and significantly reduces the probability of being punctured by laser welding, thereby further improving the welding quality, and more effectively avoiding the problems such as detachment of the active material coating layer and a lower infiltration effect of the electrolyte solution.

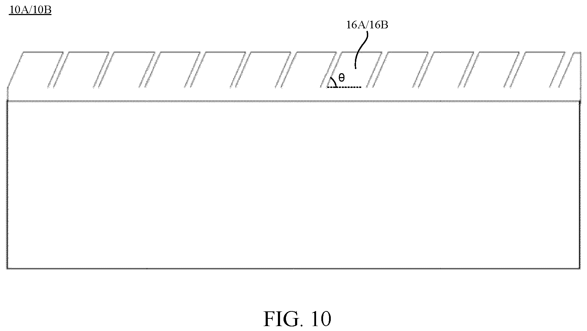

FIG. 10 is a schematic diagram of an unwound electrode plate in an electrode assembly according to some other embodiments of the present disclosure. As shown in FIG. 10, according to some embodiments of this application, the tabs (16A, 16B) of the electrode plates (10A, 10B) are inclined to one lateral edge of the current collector, and the lateral edge extends along the winding direction.

In these embodiments, at least one of the tab 16A of the first electrode plate 10A or the tab 16B of the second electrode plate 10B is inclined. For example, the tab 16A of the first electrode plate 10A is inclined, or the tab 16B of the second electrode plate 10B is inclined, or both the tab 16A of the first electrode plate 10A and the tab 16B of the second electrode plate 10B are inclined.

Conventional tabs extend vertical to the lateral edge of the current collector. In an embodiment of the present disclosure, the tabs do not extend vertically, but extend at an inclination to the lateral edge of the current collector. The tabs of the electrode plate extend at an inclination to the lateral edge of the current collector, thereby further reducing the strength of the tabs in the spacing region, making it easier to press the tabs flat, improving the denseness and thickness of the dense layer formed after the tabs are pressed flat, and improving the yield rate of welding.

As shown in FIG. 10, according to some embodiments of this application, the inclination angles θ of the tabs (16A, 16B) satisfy: $45° \leq \theta < 90°$.

For example, in some embodiments, θ may be equal to 45°, 55°, 65°, 75°, or 85°.

In these embodiments, the inclination angle of at least one of the tab 16A of the first electrode plate 10A or the tab 16B of the second electrode plate 10B meets the above condition. For example, the inclination angle of the tab 16A of the first electrode plate 10A meets the above condition, or the inclination angle of the tab 16B of the second electrode plate 10B meets the above condition, or both the inclination angles of both the tab 16A of the first electrode plate 10A and the tab 16B of the second electrode plate 10B satisfy the above condition.

After a large number of experimental analyses by the inventor of this application, it is found that when the inclination angle of the tab is less than 45°, the bending strength of the tab is not reduced effectively. Rather, the tab is made more prone to be folded and broken. The inclination angle θ of the tabs disclosed in this embodiment can effectively reduce the bending strength of the tabs, make it easier to press the tabs flat, and effectively avoid the problems of folding and breaking the tabs during the winding and/or flattening.

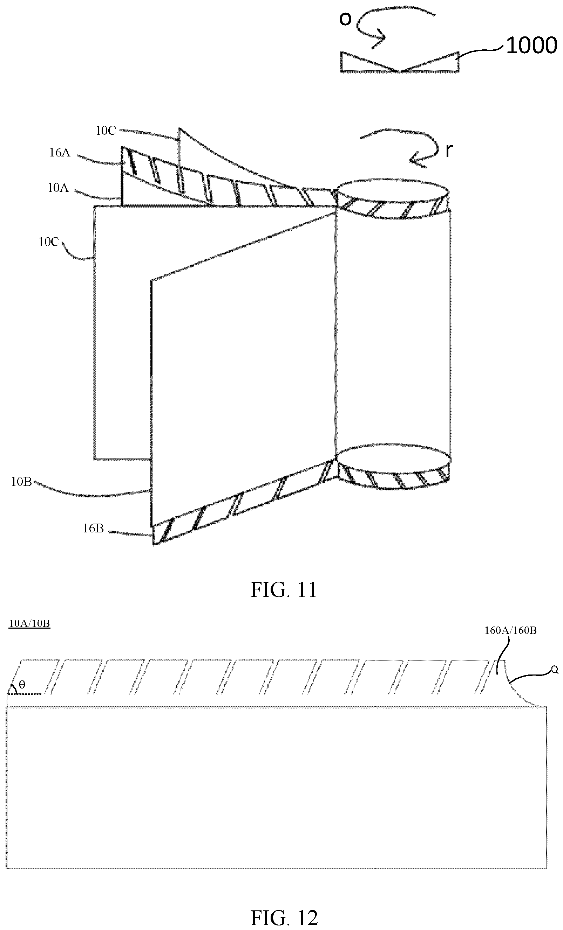

FIG. 11 is a schematic structural diagram of an electrode assembly according to some other embodiments of the present disclosure. As shown in FIG. 11, according to some embodiments of this application, the inclination direction of the tabs (16A, 16B) in the electrode plates (10A, 10B) is opposite to the winding direction r of the electrode plates (10A, 10B).

In these embodiments, at least one of the tab 16A of the first electrode plate 10A or the tab 16B of the second electrode plate 10B is inclined and the inclination direction is opposite to the winding direction r. For example, as shown in FIG. 10, both the tab 16A of the first electrode plate 10A and the tab 16B of the second electrode plate 10B are inclined, and the inclination direction of both tabs is opposite to the winding direction r.

With the inclination direction of the tabs being opposite to the winding direction of the electrode plate, the tabs is less prone to be folded and broken during winding of the electrode plate, thereby improving the yield rate of the j elly-roll structure.

As shown in FIG. 11, according to some embodiments of this application, the bent part of the tabs (16A, 16B) is bent and pressed flat by an extrusion head 1000 that rotates and squeezes. The extrusion head 1000 rotates along the rotation direction o to knead or smooth the bent part of the tabs (16A, 16B). The inclination direction of the tabs (16A, 16B) is identical to the rotation direction o of the extrusion head 1000.

In these embodiments, at least one of the tab 16A of the first electrode plate 10A or the tab 16B of the second electrode plate 10B is inclined and the inclination direction is identical to the rotation direction o of the extrusion head 1000. For example, as shown in FIG. 11, both the tab 16A of the first electrode plate 10A and the tab 16B of the second electrode plate 10B are inclined, and the inclination direction of both tabs is identical to the rotation direction o of the extrusion head 1000.

With the inclination direction of the tab (16A, 16B) being identical to the rotation direction o of the extrusion head 1000, this application avoids damage to the tabs (16A, 16B) during the flattening, especially the tabs (16A, 16B) at the outer coil and the ending of the jelly-roll structure 100, and improves the yield rate of the jelly-roll structure 100.

In some embodiments, using FIG. 11 as an example, the rotation direction o of the extrusion head 1000 is opposite to the winding direction r of the jelly-roll structure, and the inclination direction of the tabs (16A, 16B) is identical to the rotation direction o of the extrusion head 1000 and opposite to the winding direction r of the jelly-roll structure. In this way, the tabs (16A, 16B) are prevented from being folded and broken during winding of the electrode plates (10A, 10B), and the tabs (16A, 16B) are prevented from being damaged during flattening of the tabs (16A, 16B), thereby improving the yield rate of the j elly-roll structure.

FIG. 12 is a schematic diagram of an unwound electrode plate in an electrode assembly according to some other embodiments of the present disclosure. As shown in FIG. 12, according to some embodiments of this application, a bevel edge Q formed by cutting a corner is disposed on an ending side of a tab (160A, 160B) located at an ending of the jelly-roll structure. For example, on the ending side of the tab, the corner of the tab (160A, 160B) at the ending of the electrode plate may be directly cut away when the electrode plate (10A, 10B) is cut off to terminate the winding, so as to form a bevel edge Q at the ending end of the tab.

In these embodiments, the bevel edge Q is disposed on at least one of the tab 160A of the first electrode plate 10A or the tab 160B of the second electrode plate 10B, both tabs being located at the ending of the jelly-roll structure. For example, the bevel edge Q may be disposed on the tab 160A of the first electrode plate 10A at the ending of the jelly-roll structure, or the bevel edge Q may be disposed on the tab 160B of the second electrode plate 10B at the ending of the jelly-roll structure, or the bevel edge Q may be disposed on both the tab 160A of the first electrode plate 10A at the ending of the j elly-roll structure and the tab 160B of the second electrode plate 10B at the ending of the j elly-roll structure.

As shown in FIG. 11, when the winding of the electrode plate is terminated by cutting, the cutting position is uncertain. Therefore, the last tab (16A, 16B) in the spacing region may be cut and undersized in width. Consequently, the tab at the ending of the electrode plate is prone to the problems such as detachment, cracking, and warping. In view of this, in this embodiment, the tab at the ending of the electrode plate is die-cut to cut away the corner at the ending end of the tab, thereby alleviating such problems effectively.

As shown in FIG. 12, according to some embodiments of this application, the bevel edge Q of the tab (160A, 160B) located at the ending of the j elly-roll structure is at least partially arc-shaped. For example, in some embodiments, the corner of the tab (160A, 160B) at the ending of the electrode plate is die-cut arcuately to form an arc-shaped bevel edge Q.

In these embodiments, the arc-shaped bevel edge Q is disposed on at least one of the tab 160A of the first electrode plate 10A or the tab 160B of the second electrode plate 10B, both tabs being located at the ending of the jelly-roll structure. For example, the arc-shaped bevel edge Q may be disposed on the tab 160A of the first electrode plate 10A at the ending of the j elly-roll structure, or the arc-shaped bevel edge Q may be disposed on the tab 160B of the second electrode plate 10B at the ending of the jelly-roll structure, or the arc-shaped bevel edge Q may be disposed on both the tab 160A of the first electrode plate 10A at the ending of the j elly-roll structure and the tab 160B of the second electrode plate 10B at the ending of the j elly-roll structure.

After experimental analysis by the inventor of this application, it is found that die-cutting the tab at the ending of the electrode plate to form an arc-shaped bevel edge can more effectively avoid the problems such as detachment, break, and warpage of the tab at the ending, and further improve the yield rate of the j elly-roll structure.

Definitely, the bevel edge formed by die-cutting the corner of the tab is not limited to being arc-shaped, but may be in other shapes such as rectilinear.

According to some embodiments of the present disclosure, a tab shaping apparatus is further provided. As shown in FIG. 11, the tab shaping apparatus includes an extrusion head 1000. The extrusion head 1000 is configured to smooth the tabs (16A; 16B) in the electrode assembly according to any one of the above embodiments so that at least a part of each tab (16A; 16B) is bent and pressed flat against the current collector.

According to some embodiments of the present disclosure, the bent part of the tab (16A, 16B) is bent and pressed flat by an extrusion head 1000 that rotates and squeezes.

According to some embodiments of the present disclosure, the tabs (16A, 16B) are inclined to one lateral edge of the current collector, and the lateral edge extends along the winding direction r. As shown in FIG. 11, the extrusion head 1000 rotates along the rotation direction o to knead or smooth the bent part of the tabs (16A, 16B). The rotation direction o of the extrusion head 1000 is configured to be identical to the inclination direction of the tabs (16A, 16B).

With the rotation direction o of the extrusion head 1000 being identical to the inclination direction of the tabs (16A, 16B), this application avoids damage to the tabs (16A, 16B) during the flattening, especially the tabs (16A, 16B) at the outer coil and the ending of the jelly-roll structure 100, and improves the yield rate of the jelly-roll structure 100.

Definitely, the tab shaping apparatus provided in the present disclosure may further include other structures, such as a driving mechanism configured to drive the extrusion head to move. Other structures are not limited herein.

According to some embodiments of the present disclosure, a battery cell is further provided. The battery cell includes the electrode assembly according to any one of the above embodiments. For example, FIG. 2B is a schematic diagram of a connection structure of a plurality of battery cells 20, where each battery cell 20 includes the electrode assembly according to any one of the preceding embodiments. Alternatively, for example, in the battery cell 20 shown in FIG. 3, the electrode assembly 22 is the electrode assembly according to any one of the preceding embodiments. The battery cell containing the electrode assembly disclosed above exhibits superior performance, such as higher safety and a higher yield rate of products.

According to some embodiments of this application, at least a part of the tab is bent and pressed flat against the current collector. A maximum distance from a bend line to a top of the tab is h2. The jelly-roll structure is a cylindrical jelly-roll structure. The electrode assembly further includes a current collecting plate. The current collecting plate is located on one side of the cylindrical jelly-roll structure, the side being connected to the tab portion, and is fixedly connected to the bent part of the tab by welding.

For example, in FIG. 7, the jelly-roll structure 100 is a cylindrical jelly-roll structure. A tab portion 13A and a tab portion 13B are disposed at two ends of the jelly-roll structure 100 respectively. The tab portion 13A and the tab portion 13B are welded to the current collecting plate 230 separately after being bent and smoothed. In the example shown in FIG. 7, the reference numeral 231 represents the welding region 231 on the current collecting plate 20.

As shown in FIG. 7, in some embodiments, the thickness of the current collecting plate 20 is t1, the height of the bent part of the tab is h2, and t1 and h2 satisfy: $0.05 \leq t1/h2 \leq 0.2$.

In this embodiment, the dimensions of the bent part of the tab of at least one of the first electrode plate 10A or the second electrode plate 10B satisfy the above formula. For example, the bent part of the tab 16A of the first electrode plate 10A satisfies the above dimensional range, or the bent part of the tab 16B of the second electrode plate 10B satisfies the above dimensional range, or both the bent part of the tab 16A of the first electrode plate 10A and the bent part of the tab 16B of the second electrode plate 10B satisfy the above dimensional range.

After research by the inventor of this application, it is found that if the t1/h2 ratio is less than 0.05, then the height of the bent part is excessive, and the thickness of the dense layer formed after the flattening of the tab is excessive, thereby reducing the capacity of the battery. If the t1/h2 ratio is greater than 0.2, the height of the bent part is deficient, thereby resulting in deficiency of the thickness of the dense layer formed after the flattening, failing to meet the welding conditions, and being prone to problems such as puncturing during welding. The relationship between the height of the bent part of the tab and the thickness of the current collecting plate disclosed in this embodiment ensures that the thickness of the dense layer formed after the flattening of the tab meets the welding conditions, and also increases the capacity of the battery.

As shown in FIG. 2A, according to some embodiments of the present disclosure, a battery 30 is further provided. The battery includes the battery cell 20 according to any one of the preceding embodiments. The battery 30 containing the battery cell 20 exhibits superior performance, such as higher safety and a higher yield rate of products.

As shown in FIG. 1, according to some embodiments of the present disclosure, an electrical device is further provided. The electrical device includes the battery 30 according to any one of the above embodiments.

The electrical device may be any one of the electrical devices described above in which a battery needs to be used, for example, an electrically powered device or an energy storage device. As an example, the electrical device in FIG. 1 is a vehicle. The electrical device that employs the battery disclosed above exhibits superior performance, such as higher safety and reliability.

As shown in FIG. 4, some embodiments of the present disclosure provide an electrode assembly, including: a first electrode plate 10A and a second electrode plate 10B that are of opposite polarities; and a separator 10C disposed between the first electrode plate 10A and the second electrode plate 10B. The first electrode plate 10A, the separator 10C, and the second electrode plate 10B are wound along the winding direction r to form a jelly-roll structure 100. The first electrode plate 10A is a negative electrode plate, and the second electrode plate 10B is a positive electrode plate of an opposite polarity to the first electrode plate 10A. The jelly-roll structure 100 forms a cylindrical jelly-roll structure after being wound.

As shown in FIG. 5, FIG. 8, and FIG. 9, the first electrode plate 10A includes a current collector 17A (that is, a negative current collector), an active material layer 12A (that is, a negative active material layer), and a tab portion 11A (that is, a negative tab portion), and further includes an insulation layer 13A (for example, a ceramic insulation layer) that covers a surface of the current collector 17A and that is located on a side of the active material layer 12A, the side being close to the tab portion 11A. The tab portion 11A is connected to one lateral edge of the current collector 17A, and the lateral edge extends along the winding direction r. The tab portion 11A includes a continuous region 15A near the active material layer and a spacing region 14A away from the active material layer. The spacing region 14A includes a plurality of tabs 16A spaced apart along the winding direction r.

The second electrode plate 10B includes a current collector 17B (that is, a positive current collector), an active material layer 12B (that is, a positive active material layer), and a tab portion 11B (that is, a positive tab portion). The tab portion 11B is connected to one lateral edge of the current collector 17B, and the lateral edge extends along the winding direction r. The tab portion 11B includes a continuous region 15B near the active material layer and a spacing region 14B away from the active material layer. The spacing region 14B includes a plurality of tabs 16B spaced apart along the winding direction r.

As shown in FIG. 6 and FIG. 7, the tab portion 11A of the first electrode plate 10A and the tab portion 11B of the second electrode plate 10B protrude from the two ends of the jelly-roll structure 100 respectively. The tab 16A of the tab portion 11A and the tab 16B of the tab portion 11B are squeezed and pressed flat by the extrusion head 1000 respectively. The flattened tab 16A and tab 16B are welded to the current collecting plate 230 separately.

Both the tab portion 11A of the first electrode plate 10A and the tab portion 11B of the second electrode plate 10B satisfy the following dimensional settings: as shown in FIG. 8, in the axial direction of the j elly-roll structure, the height h0 of the tab portion before the bending of the tabs, the height h1 of the tab before the bending of the tab, and the height h2 of a to-be-bent-and-flattened part of the tab portion satisfy the following conditions: h0 satisfies: 4 mm ≤ h0 ≤ 7 mm; h1 satisfies: 2 mm ≤ h1 ≤ 7 mm; h2 satisfies: 2 mm ≤ h2 ≤ 7 mm; 0.25 ≤ h1/h0 < 1; and 0.3 ≤ h2/h1 ≤ 1.

In addition, as shown in FIG. 10 and FIG. 11, the tab 16A of the first electrode plate 10A and the tab 16B of the second electrode plate 10B are both inclined in a manner satisfying the following conditions: the inclination direction is opposite to the winding direction r of the jelly-roll structure and identical to the rotation direction o of the extrusion head 1000, and the inclination angle θ satisfies 45° ≤ θ < 90°.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. An electrode assembly, comprising a first electrode plate (10A) and a second electrode plate (10B) that are of opposite polarities, and comprising a separator (10C) disposed between the first electrode plate (10A) and the second electrode plate (10B), wherein the first electrode plate (10A), the separator (10C), and the second electrode plate (10B) are wound along a winding direction (r) to form a jelly-roll structure (100);
at least one of the first electrode plate (10A) or the second electrode plate (10B) comprises:

   a current collector (17A; 17B);
   an active material layer (12A; 12B), disposed at least on a surface of the current collector (17A; 17B) on a side near the separator (10C); and
   a tab portion (11A; 11B), connected to one lateral edge of the current collector (17A; 17B), wherein the lateral edge extends along the winding direction (r), the tab portion (11A; 11B) comprises a continuous region (15A; 15B) near the active material layer (12A; 12B) and a spacing region (14A; 14B) away from the active material layer (12A; 12B), and the spacing region (14A; 14B) comprises a plurality of tabs (16A; 16B) spaced apart along the winding direction (r).

2. The electrode assembly according to claim 1, wherein, in an axial direction of the jelly-roll structure (100), a height of the tab portion (11A; 11B) before bending of the tabs (16A; 16B) is h0, and a height of each tab (16A; 16B) before bending of the tab is h1, and h0 and h1 satisfy: 0.25 ≤ h1/h0 < 1.

3. The electrode assembly according to claim 2, wherein 0.4 ≤ h1/h0 ≤ 0.8.

4. The electrode assembly according to any one of claims 1 to 3, wherein at least a part of each tab (16A; 16B) is bent and pressed flat against the current collector (17A; 17B); a maximum distance from a bend line (S) to a top of the tab is h2; and, in an axial direction of the jelly-roll structure (100), a height of the tab (16A; 16B) before bending of the tab is h1, and h1 and h2 satisfy: 0.3 ≤ h2/h1 ≤ 1.

5. The electrode assembly according to any one of claims 1 to 4, wherein the jelly-roll structure (100) is a cylindrical jelly-roll structure, a diameter of a center roll of the jelly-roll structure (100) is d, a width of the tab (16A; 16B) is l, and l and d satisfy: 0.7 ≤ l/d ≤ 2.

6. The electrode assembly according to any one of claims 1 to 5, wherein a maximum spacing between adjacent tabs (16A; 16B) in the tab portion (11A; 11B) is g, a width of each tab (16A; 16B) is l, and l and g satisfy: g/l ≤ 0.2.

7. The electrode assembly according to any one of claims 1 to 6, wherein, in an axial direction of the jelly-roll structure (100), a height of the tab portion (11A; 11B) before bending of the tabs (16A; 16B) is h0, satisfying: 3 mm ≤ h0 ≤ 8 mm; and/or, a height of each tab (16A; 16B) before bending of the tab is h1, satisfying: 1 mm ≤ h1 ≤ 8 mm; and/or at least a part of the tab (16A; 16B) is bent and pressed flat against the current collector (17A; 17B), and a maximum distance from a bend line (S) to a top of the tab (16A; 16B) is h2, satisfying: 1 mm ≤ h2 ≤ 8 mm.

8. The electrode assembly according to claim 7, wherein the height h0 satisfies: 4 mm ≤ h0 ≤ 7 mm, and/or, the height h1 satisfies: 2 mm ≤ h1 ≤ 7 mm, and/or, the distance h2 satisfies: 2 mm ≤ h2 ≤ 7 mm.

9. The electrode assembly according to any one of claims 1 to 8, wherein the tabs (16A; 16B) are inclined to one lateral edge of the current collector (17A; 17B), and the lateral edge extends along the winding direction (r).

10. The electrode assembly according to claim 9, wherein an inclination direction of the tabs (16A; 16B) is opposite to the winding direction (r).

11. The electrode assembly according to claim 9 or 10, wherein at least a part of each tab (16A; 16B) is bent and pressed flat against the current collector (17A; 17B), the bent part of the tab (16A; 16B) is bent by an extrusion head (1000) that rotates and squeezes, and an inclination direction of the tabs (16A; 16B) is identical to a rotation direction (o) of the extrusion head (1000).

12. The electrode assembly according to any one of claims 9 to 11, wherein an inclination angle θ of the tabs (16A; 16B) satisfies: 45° ≤ θ < 90°.

13. The electrode assembly according to any one of claims 1 to 12, wherein a bevel edge (Q) formed by cutting a corner is disposed on an ending side of a tab (160A; 160B) located at an ending of the jelly-roll structure (100).

14. The electrode assembly according to claim 13, wherein at least a part of the bevel edge (Q) is arc-shaped.

15. A battery cell, comprising the electrode assembly according to any one of claims 1 to 14.

16. The battery cell according to claim 15, wherein

at least a part of the tab (16A; 16B) is bent and pressed flat against the current collector (17A; 17B), and a maximum distance from a bend line (S) to a top of the tab is h2; the jelly-roll structure (100) is a cylindrical jelly-roll structure; and the battery cell further comprises: a current collecting plate (230), located on one side of the cylindrical jelly-roll structure (100), the side being connected to the tab portion (11A; 11B), wherein the current collecting plate is fixedly connected to the bent part of the tab (16A; 16B) by welding, a thickness of the current collecting plate (230) is t1, and t1 and h2 satisfy:

$$0.05 \leq t1/h2 \leq 0.2.$$

17. A battery, comprising the battery cell according to claim 15 or 16.

18. An electrical device, comprising the battery according to claim 17.

19. A tab shaping apparatus, comprising an extrusion head (1000), wherein the extrusion head (1000) is configured to smooth the tabs (16A; 16B) in the electrode assembly according to any one of claims 1 to 14 so that at least a part of each tab (16A; 16B) is bent and pressed flat against the current collector (17A; 17B).

20. The tab shaping apparatus according to claim 19, wherein

the tabs (16A; 16B) are inclined to one lateral edge of the current collector (17A; 17B), and the lateral edge extends along the winding direction (r); and a rotation direction (o) of the extrusion head (1000) is configured to be identical to an inclination direction of the tabs (16A; 16B).

40

30

FIG. 1

30

32

31

20

FIG. 2A

FIG. 2B

FIG. 3

FIG. 4

FIG. 5

FIG. 6

FIG. 7

10A/10B

FIG. 8

10A/10B

FIG. 9

10A/10B

16A/16B

θ

FIG. 10

FIG. 11

FIG. 12

<div align="center">

**INTERNATIONAL SEARCH REPORT**

</div>

| International application No. |
|---|
| **PCT/CN2022/117329** |

| A. | CLASSIFICATION OF SUBJECT MATTER |
|---|---|
| | H01M50/533(2021.01)i;H01M50/538(2021.01)i;H01M4/70(2006.01)i;H01M10/0587(2010.01)i |

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 卷绕, 极耳, 连接片, 间隔, 空白, 未涂覆, 未涂布, battery, cell, wind, lug, connecting piece, interval, blank, uncoat

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113193165 A (MICROVAST POWER SYSTEMS CO., LTD.) 30 July 2021 (2021-07-30) description, paragraphs 21-63, and figures 1-13 | 1-20 |
| X | JP 2004319311 A (SHIN-KOBE ELECTRIC MACHINERY CO., LTD.) 11 November 2004 (2004-11-11) description, paragraphs 2-3 and 14-54, and figures 1-7 | 1-20 |
| X | CN 217062176 U (ZHUHAI COSMX BATTERY CO., LTD.) 26 July 2022 (2022-07-26) description, paragraphs 2 and 38-61, and figures 1-7 | 1-20 |
| A | CN 114156545 A (TIANJIN SPACE POWER TECHNOLOGY CO., LTD.) 08 March 2022 (2022-03-08) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 May 2023** | **22 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/117329**

| Patent document cited in search report | | | Publication date (day/month/year) | Patent family member(s) | | | Publication date (day/month/year) |
|---|---|---|---|---|---|---|---|
| CN | 113193165 | A | 30 July 2021 | WO | 2022247665 | A1 | 01 December 2022 |
| JP | 2004319311 | A | 11 November 2004 | JP | 4305035 | B2 | 29 July 2009 |
| CN | 217062176 | U | 26 July 2022 | None | | | |
| CN | 114156545 | A | 08 March 2022 | None | | | |

Form PCT/ISA/210 (patent family annex) (July 2022)